# EUROPEAN PATENT APPLICATION

(11) **EP 2 286 946 A1**
(43) Date of publication of application: **23.02.2011**
(21) Application number: 09275059.5
(22) Date of filing: 17.08.2009
(51) Int. Cl.: B23C 3/12

(54) **Tool**

(71) Applicant: BAE Systems PLC, 6 Carlton Gardens London SW1Y 5AD (GB)
(72) Inventor: The designation of the inventor has not yet been filed
(74) Representative: BAE SYSTEMS plc Group IP Department

(57) **Abstract**

A tool 20 for a rotary drive apparatus having a housing 24 and a rotary drive 22, such as a handheld power device, the tool comprising a shaft 26 having a projecting portion and a retrieving portion, the received portion of the shaft 26 being adapted to be received into the rotary drive 22; first and second rollers 28, 30 rotatably mounted on the projecting portion of the shaft 26, wherein the first roller 28 is furthermost from the received portion; a surface treatment member 31 fixed to the shaft 26 between the first and second rollers 28, 30; and secondary elongate support means 40 comprising fixing means 48 to fixably mount said support means 40 to the housing 24 and mounting means 46 rotatably mountable to support the projecting portion of the shaft 26 at a position remotely spaced from the fixing means. The support means 40 supports the otherwise free first end of the shaft 26 and prevents the tool 20 violently rotating in the unbalanced condition known as 'whip'.

## Description

The present invention relates to a tool for a rotary drive apparatus such as a machine tool and more specifically to a tool for a handheld power device for removing material from a workpiece.

For safety and/or aesthetic reasons, sharp edges of a workpiece often require smoothing. A typical means of such smoothing is to provide the edge of the workpiece with a flat or radius chamfer.

It is known to use a handheld power device, such as an electric or pneumatic rotary apparatus, to rotate a tool secured thereto. Typically, a rotary drive apparatus comprises a rotary drive and a housing. A portion of the rotary drive, such as a chuck, may project from the housing. The tool generally comprises a circular grinding head mounted on a shaft. A portion of the shaft is received in and secured into the rotary drive, for example into a chuck forming part of the rotary drive so that the drive causes the shaft to rotate about the shaft axis during use. The remainder of the shaft, comprising the working part of the tool, projects beyond the housing. In use, the tool is offered up to the workpiece and is manually drawn along an edge to remove material therefrom to provide the edge with a smooth chamfer. The workpiece may be aluminium or steel, for example.

Whilst the tool is being manually drawn along the edge of a workpiece, such as the edge of a panel, significant skill and effort is required to ensure the grinding head remains at the same angle, thereby to provide a uniform chamfer along the edge of the panel. Where the edge of the panel is relatively long and/or the panel is made from a relatively hard material, the skill and effort required is significantly increased.

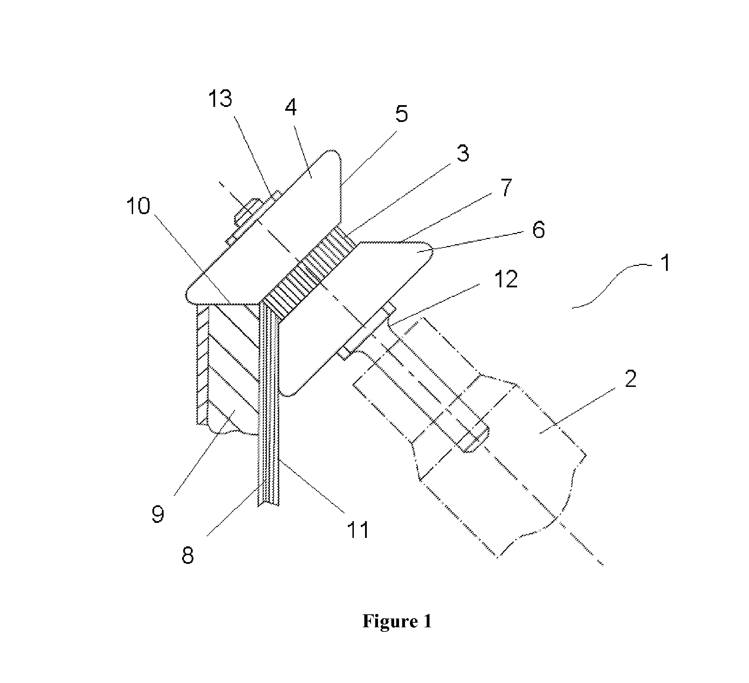

Figure 1 shows such a tool 1 mounted in the chuck of a rotary drive apparatus 2. The grinding head 3 is arranged between a first and second roller 4, 6 and each roller is allowed to rotate independently relative to the grinding head 3 on the shaft 12. Each roller 4, 6 is frusto-conical defining a roller surface 5, 7 angled towards the cutting member 3 to define a roller angle therebetween. The roller angle determines the angle of chamfer applied to the workpiece. In the example each roller is a truncated cone with a notional aperture angle of ninety degrees, the roller angle is ninety degrees and a forty-five degree chamfer is applied.

A steel panel 8 is mounted to a support structure 9, e.g. a sheet of wood, to give the combined arrangement 8, 9 sufficient thickness and a flat edge 10 for the tool to operate. The tool 1 is offered up to the arrangement 8, 9 to place the first roller surface 5 on the edge 10 of the arrangement 8, 9. The second roller surface 7 contacts an outer face 11 of the panel 8. The grinding head 3 is rotated at a relatively low speed and manually moved along the edge of the panel 8 to remove material therefrom whilst being guided by the rollers 4, 6. This reduces the degree of skill and effort required by an operator.

A problem exists when the tool is rotated at high speed before being offered up to a workpiece. As the tool 1 is only supported by means of the portion of the shaft received in the chuck of a rotary drive apparatus 2, the effect of gravity and other effects attributable to the relatively large rotating mass on the distal, projecting portion of the shaft, in particular attributable to the first roller 4, creates an out-of-balance condition when the tool 1 is rotated at high speeds. The distal end of the shaft 12 characteristically begins to rotate in larger and larger circles until a critical speed is reached, at which point the tool vibrates violently until the shaft eventually fails. The shaft 12 of the tool 1 has been known to shear before the tool 1 has been offered up to the workpiece due to this effect known as 'whip'. To add to the problem, the chuck of the rotary drive apparatus 2 may be out of balance.

This problem is made worse where the workpiece comprises carbon fibre composite (CFC). Due to the high strength characteristics of carbon fibre composites, the rotational speed of the tool must be significantly increased relative to the speed required for machining a metallic workpiece. However, when a tool rotating at high speed is applied to the edge of a CFC workpiece, such as a CFC panel, it is known for the tool to catastrophically fail.

A first aspect of the present invention provides a tool for a rotary drive apparatus having a housing and a rotary drive, the tool comprising:
- a shaft having a projecting portion and a received portion, the received portion of the shaft being adapted to be received into the rotary drive;
- first and second rollers rotatably mounted on the projecting portion of the shaft, wherein the first roller is furthermost from the received portion;
- a surface treatment member fixed to the shaft between the first and second rollers; and
- secondary elongate support means comprising fixing means to fixably mount said support means to the housing and mounting means rotatably mountable to support the projecting portion of the shaft at a position remotely spaced from the fixing means.

A suitable rotary drive apparatus having a housing and a rotary drive to which the tool is secured before operation, may for example be a floor mounted machine, such as a lathe, or a handheld device, such as a pneumatic or electric power device. Where the rotary drive apparatus is a floor mounted machine, a workpiece may suitably be moved over the first and second rollers relative to the rotary drive apparatus. Where the rotary drive apparatus is a handheld power device, the power device and tool may suitably be moved relative to the workpiece.

The received portion of the shaft is received in use into a receiving means in the rotary drive and retained therein such that the shaft may be driven rotatably about the shaft axis.

The received portion of the shaft may suitably be shaped to form a shank for fitment to suitable means in the rotary drive, such as a chuck. The surface treatment member may be a cutting, grinding or polishing member, for example, and may be fixed in rotation to the shaft by known means such as a spline and key, or other known techniques such as welding.

The secondary elongate support means provides further support on the projecting portion of the shaft at a point remote from the housing. This assists in supporting the shaft to rotate about its axis, particularly at high speed, to prevent the undesirable condition called 'whip', as described above. The secondary elongate support means provides the otherwise unsupported projecting portion of the shaft with additional support.

The secondary support means preferably comprises an elongate support member, which is preferably rigid to withstand the rotational forces exerted by the tool during high speed rotation. For example, the elongate support member may comprise one or more rods, bars and/or tubes.

The secondary elongate support member extends between the fixing means and the mounting means to rigidly couple the tool with the rotary drive apparatus to provide additional support to the tool during high speed rotation.

The secondary elongate support means comprise fixing means to attach the elongate support member to a portion of the housing of the rotary drive apparatus when in use.

The secondary elongate support means may further comprise mounting means to rotatably mount the support means in mechanical association with and support the projecting portion of the tool at a position remote from the housing. The mounting means may be adapted to engage directly with the shaft itself, or to mount the support means indirectly via engagement with one of the rollers, thereby to support the shaft. In either case, the mounting means effects a freely rotatable engagement. When the mounting means engages directly upon the shaft, the shaft must be free to rotate relative to the support means. When the mounting means engages upon a roller, the rollers must be free to roll relative to the support means.

Preferably the mounting means is engageable with the shaft at a point distal of the surface treatment member and more preferably at a point distal of the first roller. The mounting means may be engageable with the shaft at a point which is proximal the projecting portion of the shaft.

Suitably the mounting means therefore comprises a bearing. A bearing allows the shaft and/or rollers to rotate whilst the tool is mounted in or on said mounting means and is being supported by the secondary elongate support means.

Preferably the mounting means is engageable with a bearing surface of the first roller. The bearing surface may be provided by an extended portion of the first roller which extends in a longitudinal direction away from the surface treatment member. The mounting means preferably engages with the tool at a location which is as far away from the rotary drive as possible, thereby to provide maximum support to the tool in use. The extended portion may extend longitudinally from the widest point of the first roller. Alternatively, the extended portion may be a portion of reduced diameter of the first roller which provides a shoulder for the mounting means to engage with.

The mounting means may comprise a first collar engageable with the extended portion of the first roller. The first collar may suitably be a one-piece collar which slideably engages on to the extended portion of the first roller or the first collar may be a two-piece collar which is attachable around the extended portion of the first collar.

The first collar may be adapted to attach to the elongate support member. The first collar may be slideably mountable on or over the elongate support member. Alternatively, the first collar may be fixable to the elongate support member or attached thereto by any known fastening technique, such as a screw or bolt. The first collar may clamp to the elongate support member.

Suitably the first collar comprises first clamping means to clamp the first collar to the secondary elongate support means. The first collar may be a one-piece collar and the first clamping means may be integral therewith. The first clamping means may comprise a fastener, such as a bolt or screw, to increase or decrease the clamping force applied to the secondary elongate support means.

The fixing means may extend from the housing of the rotary drive apparatus and may be integral therewith. Preferably the fixing means is attachable to the housing of the rotary drive apparatus. Suitably the fixing means is adapted to be engageable around a portion of the housing of the rotary drive apparatus. Preferably the portion of the housing with which the fixing means is adapted to engage is proximal the rotary drive of the rotary drive apparatus in which the received portion of the shaft is secured.

The fixing means preferably comprises a second collar engageable with the rotary drive apparatus. The second collar may be slideably mountable on or over the housing of the rotary drive apparatus. Alternatively, the second collar may be fixable to the housing or attached thereto by any known fastening technique, such as a screw or bolt. The second collar may clamp around the housing of the rotary drive apparatus.

The second collar may comprise second clamping means to clamp the second collar to the housing of the rotary drive apparatus. Preferably the second clamping means also clamps the second collar to the secondary elongate support means. Suitably the second collar may comprise a two-piece collar clamp. A two-piece collar clamp will be understood to take the form of two collar halves which are clamped together around the housing of the rotary drive apparatus and the secondary elongate support means by the second clamping means. The second clamping means may comprise one or more fasteners, such as a bolt or screw, to increase or decrease the clamping force applied to the housing of the rotary drive apparatus and the secondary elongate support means.

Preferably the first and second rollers comprise solids of rotation adapted to be mounted on the shaft via the rotational axis of symmetry. Preferably the first and second rollers are frusto-conical in shape. The surfaces of the first and second rollers define roller surfaces for engaging with a workpiece in use.

The roller surfaces together define a roller angle. Suitably the roller angle is between 180 degrees and 20 degrees. Where the roller angle is 180 degrees, it will be understood that the roller surfaces of the first and second rollers are parallel with a longitudinal axis of the shaft. In many modes of operation, a suitable roller angle is about ninety degrees.

The first and second rollers preferably have geometrically similar shapes. For example, both first and second rollers may be truncated cones having the same aperture angle. For example, both rollers may have an aperture angle of about ninety degrees to define a roller angle of about ninety degrees. Suitably the first roller may be larger than the second roller. The first roller may have a length between two ends which is greater than that of the second roller.

Suitably a spacer washer may be provided between the surface treatment member and each of the first and second rollers.

The secondary elongate support member may extend beyond the mounting means in a longitudinal direction. A handle may be provided on the extension of the secondary elongate support member for a user to hold during operation. Alternatively or additionally, a handle could be provided on an extension of the projecting portion of the shaft proximal the first roller. A handle may provide the user with additional means to guide the tool along an edge of a workpiece and/or provide additional support to the tool during use.

Preferably the first and second rollers are made from EN17 tool steel. The steel preferably has a Rockwell hardness value of from 56 to 60. It is preferred that the shaft is made from silver steel.

A further aspect of the present invention provides a tool assembly comprising a tool as described above and a rotary drive apparatus having a housing and a rotary drive, the shaft mounted for rotation in the rotary drive, and the support means engaged on the housing.

A further aspect of the present invention provides a kit of parts comprising:
- a shaft having a projecting portion and a received portion, the received portion of the shaft being adapted to be received into a rotary drive of a rotary drive apparatus having a housing;
- a plurality of first and second rollers selectively rotatably mountable on the projecting portion of the shaft;
- at least one surface treatment member fixed to the shaft between the first and second rollers; and
- secondary elongate support means comprising fixing means to fixably mount said support means to the housing and mounting means rotatably mountable to support the projecting portion of the shaft at a position remotely spaced from the fixing means.

A further aspect of the present invention provides a method of assembling a tool as described above for a rotary drive apparatus having a housing and a rotary drive, for example from a kit of parts as described above, the method comprising the steps of:
- selecting first and second rollers, for example from the plurality of further first and second rollers;
- mounting the second roller to the projecting portion of the shaft;
- fixing the surface treatment member to the shaft adjacent to the second roller;
- mounting the first roller to the projecting portion of the shaft adjacent the surface treatment member; and
- providing the secondary elongate support means to fixably mount the support means to the housing of a rotary drive apparatus and rotatably mount said support means on the projecting portion of the shaft at a position remotely spaced from the fixing means.

A further aspect of the present invention provides a method of using a tool as described above with a rotary drive apparatus having a housing and a rotary drive to provide a chamfer to the edge of a workpiece, comprising the steps of:
- securing the received portion of the shaft of the tool to the rotary drive of the rotary drive apparatus;
- rotating the shaft and surface treatment member with the rotary drive apparatus;
- offering the surface treatment member to the edge of the workpiece;
- engaging the first roller and second rollers with the workpiece; and
- rolling the tool along the workpiece thereby to guide the surface treatment member over the edge of the workpiece at a desired angle thereto.

A further aspect of the present invention provides secondary elongate support means for supporting a tool when in use with a rotary drive apparatus having a housing and a rotary drive, the support means comprising:
- a secondary rigid elongate support member;
- fixing means to fixably mount the elongate support member to the housing; and
- mounting means rotatably mountable on a projecting portion of the shaft at a position remotely spaced from the fixing means.

An embodiment of the present invention will now be described, by way of example only, in accordance with the accompanying drawings, in which:
- Figure 1 shows a conventional tool in use fitted to a handheld power device;
- Figure 2 shows an embodiment of the present invention fitted to a handheld power device; and
- Figure 3 shows the tool of Figure 2.

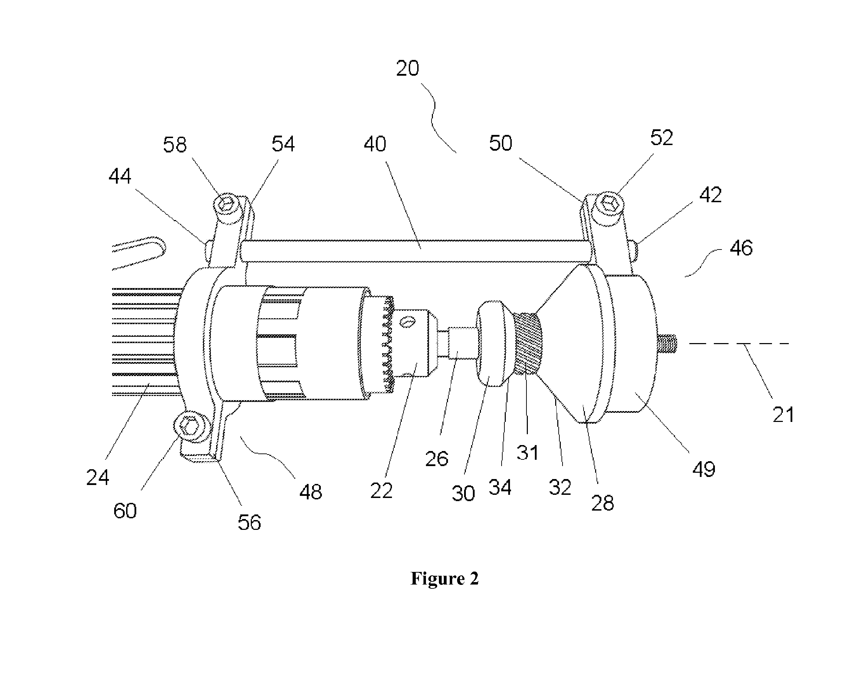

As shown in Figure 2, a tool 20 is mounted in the chuck 22 of a pneumatic handheld power device 24. The tool 20 has a shaft 26 having a shaft axis 21 and a received portion and a projecting portion. The received portion is securely mounted in the chuck 22 of the device 24.

The tool 20 has first and second rollers 28, 30 rotatably mounted to the projecting portion of the shaft 26. A grinding member 31 is fixed to the shaft 26 and is provided between the first and second rollers 28, 30.

Each roller 28, 30 is frusto-conical each having a roller surface 32, 34 which is sloped towards the grinding member 31. The roller surfaces 32, 34 define a desired roller angle therebetween. A ninety degree roller angle is shown in the figures but other roller angles can be achieved for a desired angle of chamfer by providing first and second rollers 28, 30 with roller surfaces 32, 34 orientated at other angles relative to the shaft axis 21.

As shown in Figure 2, roller surface 32 has a significantly larger surface area than roller surface 34. This is because in use roller surface 32 contacts the flat surface of the composite to which the tool 20 applies a chamfer.

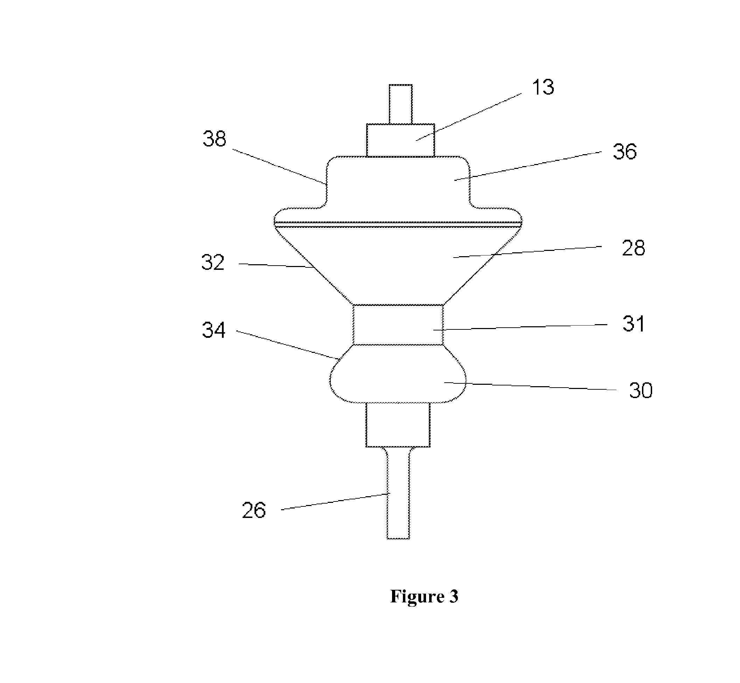

As shown in Figure 3, the first roller 28 has a portion 36 of reduced diameter which extends longitudinally away from the grinding member 31. This extended portion 36 forms a shoulder which provides a bearing surface 38.

To provide the tool 20 with additional support to prevent 'whip' when the tool is rotating at high speeds, a rigid bar 40 is provided. One end 42 of the bar 40 is attached to the tool 20 by a first collar 46. The other end 44 of the bar 40 is attached to the body of the power device 24 by a second collar 48.

The first collar 46 defines an annular member 49 which engages with the bearing surface 38 of the extended portion 36. This arrangement forms a bearing to allow the first roller 28 to rotate within the first collar 46. A clamping portion 50 of the first collar 46 extends from the annular member 49. The clamping portion 50 defines an aperture for the end 42 of the bar 40 to be slideably received. A bolt 52 is provided to securely clamp the clamping portion 50 of the first collar 46 to the end 42 of the bar 40.

The second collar 48 is a two-piece collar clamp having two clamping portions 54, 56 extending therefrom. As shown, the second collar 48 is shaped to engage with and clamp around the cylindrical housing of the power device 24. Of course, other shapes of clamp can be envisaged.

Clamping portion 54 defines an aperture for the end 44 of the bar 40 to be slideably received. Bolts 58, 60 are provided to securely clamp the second collar 48 to the end 44 of the bar 40 and to the housing of the power device 24.

In use, the bar 40 provides a rigid support between the projecting portion of the shaft 26 and the power device 24. The bar 40 supports the otherwise free end of the shaft 26 and prevents the tool 20 violently rotating in the unbalanced condition known as 'whip', as described above, before the tool 20 is offered up to a workpiece. The bar 40 also provides support to the tool 20 when the tool 20 is being manually guided along the edge of a workpiece, in a similar manner as shown in Figure 1, to provide a chamfer thereto. When the tool 20 is being rolled along the edge of a workpiece by a user, a downward force is applied to the tool 20 via the power device 24 to ensure the tool 20 is in contact with the workpiece throughout the machining operation. A further force in the direction of movement of the tool 20 is also applied to guide the tool 20 along the workpiece. The bar 40 prevents flexing of the shaft 26 when these forces are being applied by a user during operation.

The roller angle in the figures is shown to be approximately ninety degrees to provide a forty-five degree chamfer angle. If a different chamfer angle is desired, first and second rollers 28, 30 may be selected from a plurality of rollers to define a desired roller angle between the selected first and second rollers 28, 30.

To assemble the tool 20 prior to use, the second roller 30 is mounted to the projecting portion of the shaft 26. The grinding member 31 is then fixed to the shaft 26 followed by the first roller 28 being mounted to the shaft 26. The arrangement 30, 31, 28 is held together by a nut 13 engaging with a thread on the projecting portion of the shaft 26, as shown in Figure 3. One or more spacer washers may be provided between the grinding member 31 and each of the first and second rollers 28, 30.

The second collar 48 is then securely clamped around the housing of the power device 24 and the end 44 of the bar 40 by tightening the bolts 58, 60 of clamping portions 54, 56 of the second collar 48.

The first collar 46 is then slideably mounted on the extended portion 36 to provide a bearing arrangement to allow the first roller 28 to rotate inside the first collar 46 during operation. The clamping portion 50 of the first collar 46 is slideably mounted to the end 42 of the bar 40 and clamped securely thereto by tightening the bolt 52 of clamping portion 50.

Of course, it can be envisaged that the first collar 46 may be fitted to the tool 20 before the second collar 48 is fitted to the housing of the handheld power device 24.

In a further embodiment of the present invention, the end 42 of the bar 40 may extend from the first collar 46 in a longitudinal direction. A handle (not shown) may be mounted to the extension of the bar 40 for a user to hold during operation. Alternatively or additionally, a handle could be provided on an extension of the projecting portion of the shaft 26 proximal the first roller 28. A handle may provide the user with additional means to guide the tool 20 along an edge of a workpiece and/or provide additional support to the tool 20 during use.

## Claims

1. A tool for a rotary drive apparatus having a housing and a rotary drive, the tool comprising:
- a shaft having a projecting portion and a received portion, the received portion of the shaft being adapted to be received into the rotary drive;
- first and second rollers rotatably mounted on the projecting portion of the shaft, wherein the first roller is furthermost from the received portion;
- a surface treatment member fixed to the shaft between the first and second rollers; and
- secondary elongate support means comprising fixing means to fixably mount said support means to the housing and mounting means rotatably mountable to support the projecting portion of the shaft at a position remotely spaced from the fixing means.

2. A tool according to claim 1, wherein the secondary elongate support means comprises a rigid elongate support member.

3. A tool according to claim 1 or 2, wherein the mounting means is engageable directly upon the shaft.

4. A tool according to claim 3, wherein the mounting means is mountable upon one of the first or second rollers thereby to support the shaft.

5. A tool according to any preceding claim, wherein the mounting means comprises a bearing.

6. A tool according to claim 5, wherein the mounting means is engageable with a bearing surface of the first roller.

7. A tool according to claim 6, wherein the bearing surface is provided by an extended portion of the first roller which extends in a longitudinal direction away from the surface treatment member.

8. A tool according to claim 7, wherein the mounting means comprises a first collar engageable with the extended portion of the first roller and first clamping means to clamp the first collar to the secondary elongate support means.

9. A tool according to any preceding claim, wherein the fixing means comprises a second collar engageable with the housing and second clamping means to clamp the second collar to the secondary elongate support means and the housing.

10. A tool according to claim 9, wherein the second collar comprises a two-piece collar clamp.

11. A tool according to any preceding claim, wherein the first and second rollers are frusto-conical in shape.

12. A tool according to claim 11, wherein the first and second rollers define a roller angle between their conical surfaces of between 180 degrees and 20 degrees.

13. A tool assembly comprising a tool according to any preceding claim and a rotary drive apparatus having a housing and a rotary drive, the shaft mounted for rotation in the rotary drive, and the support means engaged on the housing.

14. A kit of parts comprising:
- a shaft having a projecting portion and a received portion, the received portion of the shaft being adapted to be received into a rotary drive of a rotary drive apparatus having a housing;
- a plurality of first and second rollers selectively rotatably mountable on the projecting portion of the shaft;
- at least one surface treatment member fixable to the shaft between the first and second rollers; and
- secondary elongate support means comprising fixing means to fixably mount said support means to the housing and mounting means rotatably mountable to support the projecting portion of the shaft at a position remotely spaced from the fixing means.

15. A method of assembling a tool according to any preceding claim comprising the steps of:
- selecting first and second rollers;
- mounting the second roller to the projecting portion of the shaft;
- fixing the surface treatment member to the shaft adjacent to the second roller;
- mounting the first roller to the projecting portion of the shaft adjacent the surface treatment member; and
- providing the secondary elongate support means to fixably mount the support means to the housing of a rotary drive apparatus and rotatably mount said support means on the projecting portion of the shaft at a position remotely spaced from the fixing means.
